Europäisches Patentamt

European Patent Office

Office européen des brevets

(11) Publication number: **0 290 135**
**A2**

# EUROPEAN PATENT APPLICATION

(21) Application number: 88302813.6

(22) Date of filing: 30.03.88

(51) Int. Cl.⁴: **F16F 15/12 , F16D 13/68**

(30) Priority: 02.05.87 GB 8710519

(43) Date of publication of application:
09.11.88 Bulletin 88/45

(84) Designated Contracting States:
DE ES FR GB IT

(71) Applicant: **AUTOMOTIVE PRODUCTS PLC**
**Tachbrook Road**
**Leamington Spa Warwickshire CV31**
**3ER(GB)**

(72) Inventor: **Shirley, Graham John**
**1 Redcar Close**
**Lillington Leamington Spa CV32 7SU(GB)**

(74) Representative: **Cundy, Anthony Brian et al**
**Anthony Cundy & Company 384 Station**
**Road Dorridge**
**Solihull West Midlands B93 8ES(GB)**

(54) Torsional vibration damper.

(57) A torsional vibration damper, for example for incorporation in automobile friction clutch driven plates, comprises a hub (11) and an outer member (14) mounted for limited relative angular movement with respect to the hub. Primary resilient means such as circumferentially directed coil springs (29) act between the hub and the outer member to control the relative rotation, the resilient means biasing the outer member to a predetermined position relative to the hub. A friction control member such as a hysteresis pressure plate (35) is mounted for rotation with one of the hub and the outer member and is provided with protrusions (37) which in the predetermined relative position engage with corresponding depressions (38) provided in the other of the hub and the outer member and which bear against the other of the hub and the outer member when the outer member is moved through more than a predetermined angle from the predetermined position. Secondary resilient means such as a Belleville washer (40) is positioned between the friction control member (35) and said one of the hub and the outer member so as to be placed under compression when the protrusions (37) of the friction control member bear against said other of the hub and the outer member.

FIG. 1.

Xerox Copy Centre

# TORSIONAL VIBRATION DAMPER

The present invention relates to torsional vibration dampers, particularly but not exclusively for incorporation in automobile friction clutch driven plates.

Friction clutch driven plates for motor vehicles typically comprise a friction facing carrier mounted on and capable of limited angular movement about a flanged hub, resilient means acting between the carrier and the hub flange to control the angular movement, and friction damping means acting between the hub and the carrier.

The vibrations occurring in the vehicle transmission system are absorbed by the angular movement between the hub and the carrier and are damped by the friction damping means.

It can be advantageous to vary the friction force of the damping means to provide a relatively low friction when the angular movement between the hub and the carrier is small, but to provide relatively high friction when the angular movement is large. Clutch driven plates incorporating variable friction damping means are shown, for example, in U.K. Patent Application No. 2 127 131A and in French Patent Specification No. 1 411 155. However, these known variable friction damping means suffer a number of drawbacks in their manufacture and use.

It is an object of the present invention to provide a torsional vibration damper having variable friction damping and which is simple in construction and effective in operation.

According to the present invention there is provided a torsional vibration damper comprising:
a hub;
an outer member mounted for limited relative angular movement with respect to the hub;
primary resilient means acting between the hub and the outer member to control the relative rotation, the resilient means biasing the outer member to a predetermined position relative to the hub;
a friction control member mounted for rotation with one of said hub and said outer member and provided with protrusions which in said predetermined position engage with corresponding depressions provided in the other of said hub and said outer member and which bear against said other of said hub and said outer member when said hub is moved through more than a predetermined angle from said predetermined position; and
secondary resilient means positioned between the friction control member and said one of said hub and said outer member so as to be placed under compression when the protrusions of the friction control member bear against other of said hub and said outer member.

Preferably the friction control member is mounted for rotation with the outer member. The depressions may be radially inward extensions of apertures which accommodate the primary resilient means. The friction control member may be mounted for movement with the outer member by means of axially extending tabs which engage with corresponding recesses in the outer member. The tabs may be provided at the radially inner periphery of the friction control member. The secondary resilient means may comprise a Belleville spring positioned between the friction control member and the outer member.

For a better understanding of the present invention and to show more clearly how it may be carried into effect reference will now be made, by way of example, to the accompanying drawings in which:

Figure 1 is a cross-sectional view of a friction clutch driven plate;

Figure 2 is a diagrammatic elevational view of a hysteresis pressure plate forming part of the friction clutch driven plate shown in Figure 1; and

Figure 3 is an end elevation of part of the hysteresis pressure plate shown in Figure 2.

A friction clutch driven plate incorporating a torsional vibrational damper comprises a hub 11 having a splined central opening 12 for engagement on a shaft to be driven by the driven plate, typically the input shaft to a gear box. The hub also incorporates a radial flange 13.

An outer member forming a friction facing carrier 14 is constituted primarily by two annular side plates 15 and 16 arranged one to each side of the flange 13 and joined together by shouldered rivets 17 normally referred to as stop pins. Around its outer periphery, the side plate 15 carries a series of spring steel segments 18 which in turn carry friction facings 19 and 21. Rivets 22 secure the segments to the side plate, rivets 23 secure the friction facing 19 to the segments, and rivets 24 secure the facing 21 to the segments.

Side plate 15 has a central aperture by means of which the carrier is centered on the hub 11 through the intermediary of a shouldered friction washer 25 which also extends between the flange 13 and the side plate to provide controlled friction for angular movement between the hub and the facing carrier. The side plate 15 is keyed to the washer 25 by means of a number, for example four, of circumferentially spaced axially extending notches (not shown) formed on the side plate 15 which engage with corresponding protrusions formed on the washer 25. If desired, the washer 25 could be moulded to the side plate 15. Side plate 16 incorporates a generally circular central aperture, which surrounds the hub with a small clearance, and a number (four in the drawings) of radially outwardly extending recesses the purpose of which will be described in more detail hereinafter.

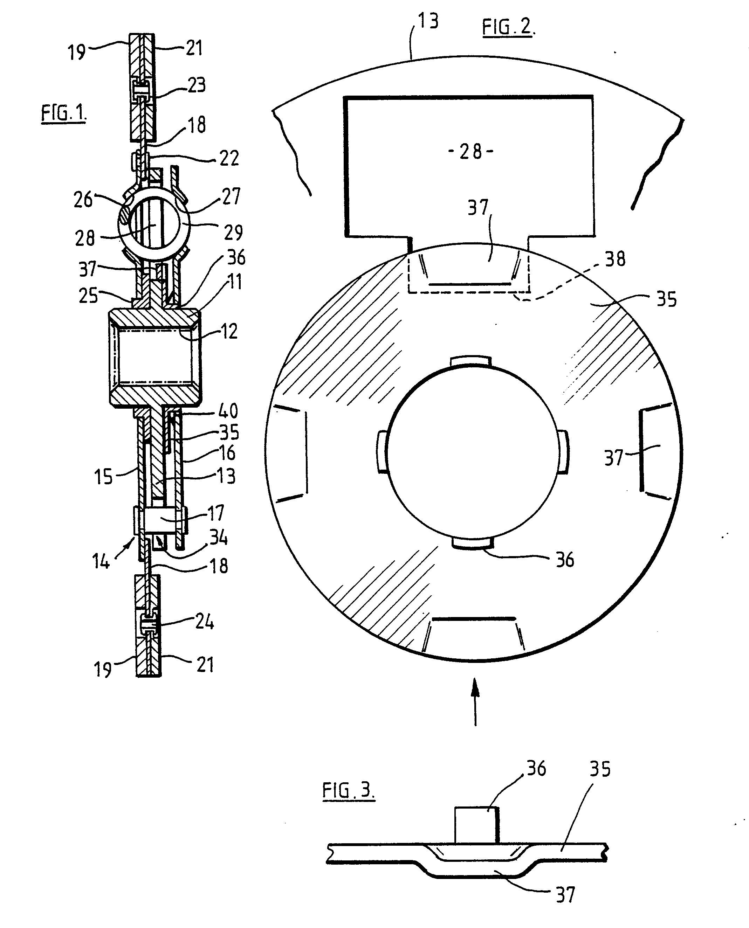

Both side plates 15 and 16 and the hub flange 13 have generally mutually aligned circumferentially extending apertures or windows 26,27 and 28 (see Figure 2) equally spaced at four locations around the circumference. These apertures carry primary resilient means in the form of circumferentially directed coil springs 29 which bear against the ends of the windows and are compressed by relative angular movement between the hub 11 and carrier 14. The stop pins 17 referred to earlier pass through notches 34 in the outer periphery of the flange. Relative angular movement between the hub and the carrier is limited by the stop pins 17 coming into engagement with the ends of the notches 34.

The driven plate also incorporates a friction control member in the form a hysteresis pressure plate or cam plate 35, which is positioned between the side plate 16 and flange 13, and secondary resilient means in the form of a Belleville washer 40 between the cam plate 35 and the side plate 16. The cam plate is generally annular and includes a circular aperture for mounting on the hub 11. A number (four in the drawings) of axial tabs 36 extend from the cam plates in the region adjacent to the circular aperture and engage with the corresponding recesses formed in the side plate 16 as described above. Thus the cam plate 35 rotates with the side plate 16. In the region of its outer periphery the cam plate is formed with a number (four in the drawings) of protrusions in the form of cam segments 37 which may be formed by pressing the cam plate 35. The cam segments engage in depressions in the flange 13 which are formed by radially inwardly formed extensions 38 of the windows 28. The cam segments 37 and the extensions 38 are dimensioned to permit limited angular movement of the cam segments within the extensions. When the cam segments 37 have taken up the angular movement within the extensions 38, in order to accommodate further movement of the cam plate 35 the cam segments are forced out of the extensions and bear against the flange 13. This causes the cam plate to be moved axially towards side plate 16 and to compress the Belleville washer 40.

In use, when torque is applied through the friction facings for transmission through the carrier to the hub, this torque is transmitted through the springs 29 and results in relative movement between the carrier and the hub. During this movement, the cam plate 35 moves with the carrier by virtue of the engagement of tabs 36 with the side plate 16. The cam segments 37 protrude into the window extensions 38 with the result that the Belleville washer 40 is uncompressed or partially compressed and friction between the washer 25 and side plate 15 is low. Once the angular movement of the cam segments 37 within the extensions 38 has been taken up, further movement between the hub and the carrier forces the cam segments 37 out of the extensions 38 and on to the face of the flange 13. This compresses the Belleville washer 40 and increases the frictional force between the flange 13 and the friction washer 25 and between the flange 13 and the cam plate 35. As load is released the components deflect back to the position shown under the influence of the springs 29.

Although the axial tabs of the cam plate are shown at the radially inner edge of the cam plate, it is possible to alter the position of the tabs so that they engage in an alternative region of the side plate. In addition, while the axial tabs are shown as engaging with the side plate and the cam segments as engaging with the flange 13, it is possible to reverse these elements and for the axial tabs to engage with the flange and the cam segments to engage with apertures in the side plate, the Belleville washer being positioned between the cam plate and the flange.

## Claims

1. A torsional vibration damper comprising a hub (11), an outer member (14) mounted for limited relative angular movement with respect to the hub and primary resilient means (29) acting between the hub and the outer member to control the relative rotation, the resilient means biasing the outer member to a predetermined position relative to the hub characterised in that the damper includes a friction control member (35) mounted for rotation with one of said hub and said outer member and provided with protrusions (37) which in said predetermined position engage with corresponding depressions (38) provided in the other of said hub and said outer member and which bear against said other of said hub and said outer member when said outer member is moved through more than a predetermined angle from said predetermined position, and the damper further includes secondary resilient means (40) positioned between the friction control member and said one of said hub and said outer member so as to be placed under compression when the protrusions of the friction control member bear against said other of said hub and said outer member.

2. A damper as claimed in claim 1, characterised in that the friction control member (35) is mounted for rotation with the outer member (14).

3. A damper as claimed in claim 2, characterised in that the depressions (38) comprise radially inward extensions of apertures which accommodate the primary resilient means (29).

4. A damper as claimed in claim 2 or 3, characterised in that the friction control member (35) is mounted for movement with the outer member (14) by means of axially extending tabs (36) which engage with corresponding recesses in the outer member.

5. A damper as claimed in claim 4, characterised in that the tabs (36) are provided at the radially inner periphery of the friction control member (35).

6. A damper as claimed in any one of claims 2 to 5, characterised in that the secondary resilient means (40) comprises a Belleville washer positioned between the friction control member (35) and the outer member (14).

0 290 135

FIG.1.

FIG.2.

FIG.3.